# EUROPÄISCHE PATENTANMELDUNG

(11) **EP 1 331 212 A1**
(43) Veröffentlichungstag der Anmeldung: **30.07.2003**
(21) Anmeldenummer: 03000590.4
(22) Anmeldetag: 14.01.2003
(51) Int. Cl.: C04B 41/53

(54) **Mittel zur Beseitigung und Verhinderung von Ablagerungen auf mineralischen Oberflächen**

(30) Priorität: 22.01.2002 DE 10202167
(71) Anmelder: Nutrinova Nutrition Specialties & Food Ingredients GmbH, 65929 Frankfurt am Main (DE)
(72) Erfinder: Wetzel, Ariane, 65929 Frankfurt (DE); Iven, Britta, 65195 Wiesbaden (DE)
(74) Vertreter: Schweitzer, Klaus, Dr.

(57) **Zusammenfassung**

Wässrige Lösungen von Alkali- oder Erdalkalisalzen der Sorbinsäure, insbesondere von Kaliumsorbat, eignen sich sehr gut zur umweltfreundlichen Beseitigung oder Verhinderung von Belägen auf mineralischen Oberflächen wie Stein- , Keramik-, Beton- oder Mörteloberflächen, die durch oder nach Algenbewuchs dort auftreten.

## Beschreibung

Auf mineralischen Oberflächen wie z. B. auf Steinen, Keramik, Beton- oder Mörteloberflächen, die sich in feuchter Atmosphäre befinden, können die verschiedensten Ablagerungen auftreten. Dazu gehört besonders auch der Befall mit bzw. das Auftreten von blütenlosen Pflanzen (Kryptogamen) wie z. B. Algen, Moose, Flechten und Pilze. Diese Arten von Organismen können unter geeigneten Bedingungen die verschiedensten Arten von Steinen und Oberflächen besiedeln und zu unansehnlichen Belägen führen.

Der erste Schritt einer solchen Besiedelung ist meist das Auftreten von Algenbewuchs. Algen als autotrophe Organismen benötigen für ihr Wachstum lediglich eine gewisse Lichtmenge und eine dauerhaft feuchte Umgebung. Diese Bedingungen sind auf porösen mineralischen Oberflächen gegeben. Es ist allgemein bekannt, dass z. B. Steine in Gärten, besonders in schattigen Gärten, sehr schnell von Algen überzogen werden. Auch auf der Oberfläche (Fassade) freistehender Bauwerke, insbesondere an den Stellen, die nicht oder wenig besonnt werden, tritt Algenwachstum auf.

Die von Algen gebildeten oder Algen enthaltenden Beläge sind zumindest anfänglich grün und können schon dadurch das Aussehen befallener Oberflächen beeinträchtigen. In der Regel sind diese Beläge nicht ganz glatt, so dass Schmutzpartikel wie z. B. Rußteilchen besonders gut darauf haften bleiben. Das hat zur Folge, dass die Beläge schnell grau bis schwarz werden und damit die befallenen Oberflächen ausgesprochen unansehnlich machen.

Nachdem sich durch den Algenbewuchs und daran anhaftende Schmutzpartikel genügend organische Masse gebildet und abgelagert hat, siedeln sich im nächsten Schritt heterotrophe Organismen wie Flechten, Moose und Pilze an, welche die vorhandene organische Masse abbauen. Die dabei entstehenden Abbauprodukte können die mineralische Oberfläche angreifen und dauerhaft schädigen. Daraus resultiert in aller Regel eine zusätzliche und dauerhafte Beeinträchtigung des Aussehens.

Diese Art der Sekundärbesiedelung tritt ebenfalls bevorzugt auf beschatteten, porösen, waagerechten Flächen wie z.B. Tennisplätzen, Laufbahnen und Spielplätzen auf und kann besonders bei feuchter Witterung aufgrund der Rutschgefahr zu einem erhöhten Unfallrisiko führen. Das gleiche gilt insbesondere für gepflasterte Wege.

Bei glatten Oberflächen lassen sich solche Belege manchmal mechanisch noch relativ leicht entfernen. Schwieriger wird es, wenn die Oberfläche rau und uneben ist. Die mechanische Beseitigung der Belege ist bei derartigen Oberflächen schwierig und gelingt oft weder vollständig noch so weit, dass die Oberfläche wieder ein ansprechendes Aussehen bekommt. Darüber hinaus wachsen verbleibende Reste des ursprünglichen Belags sehr schnell wieder zu flächigen Belägen aus, wenn diese Organismen zuvor nicht vollständig abgetötet bzw. entfernt worden sind.

Reinigungsmittel, die oberflächenaktive Substanzen enthalten, können zwar die Entfernung solcher Beläge erleichtern, sind erfahrungsgemäß aber nur bei glatten Oberflächen brauchbar. Bei rauen Oberflächen bleibt ihre Wirkung in der Regel unbefriedigend.

Schwierig kann die Beseitigung von diesen Belägen auf Steinen aus den verschiedensten Gründen sein. Bei glatten Oberflächen, die mechanisch noch am leichtesten zu reinigen sind, besteht bei intensiver Bearbeitung das Risiko von Kratzspuren. Sie beeinträchtigen den Oberflächenglanz auf Dauer und erhöhen die Anfälligkeit für eine erneute Belagbildung. Bei chemisch nicht völlig resistenten Steinen wie z. B. bei kalkhaltigen Steinen, insbesondere Marmor, besteht das Risiko, dass aggressive Reinigungsmittel den Stein insgesamt angreifen und entweder seine Oberfläche beschädigen oder seinen Zusammenhalt lockern. Das gilt insbesondere für Reinigungsmittel mit niedrigem pH-Wert.

Auch in mit Wassern gefüllten Becken, z. B. Gartenteichen, Vogeltränken und in Bädern, namentlich Freibädern, kann unerwünschtes Algenwachstum auftreten. Eine mechanische Entfernung des Belags von den Beckenwänden- und rändern ist meist nur nach Ablassen des Wassers möglich und dementsprechend aufwändig. Chemische Zusätze zum Wasser kommen in diesen Anwendungen z. T. nicht in Frage, insbesondere dann nicht, wenn Wildtiere wie Vögel, Haustiere oder auch Kinder Zugang zum Wasser haben. Auch in diesen Fällen kann sich also die Notwendigkeit ergeben, Algenbeläge schnell und ohne großen Aufwand sowie ohne das Risiko gesundheitlich möglicherweise bedenklicher Rückstände zu entfernen.

Für die Beseitigung von Algen und nach Algenbewuchs entstandenen komplex zusammengesetzten Belägen werden die verschiedensten Mittel angeboten, die in der Regel reinigend wirkende Inhaltsstoffe und zum Teil auch biozide Wirkstoffe enthalten. Die Wirkung dieser Mittel ist oft unbefriedigend. Dazu kommt, dass sie in vielen Fällen sauer eingestellt und damit für säureempfindliche Steine wie Kalkstein ungeeignet sind.

Daraus ergibt sich, dass eine einfache Beseitigung von Algen und Algen enthaltenden Belägen, insbesondere von Steinen, bisher nicht in befriedigender Weise möglich ist.

Aufgabe der vorliegenden Erfindung war daher in erster Linie die Bereitstellung eines Mittels zur Beseitigung und/oder Verhinderung von Ablagerungen, wie sie insbesondere durch oder nach Algenbewuchs auf Oberflächen jeglicher Art auftreten. Insbesondere handelt es sich dabei um die eingangs erwähnten mineralischen Oberflächen und dabei wiederum bevorzugt um Steinoberflächen im weitesten Sinn.

Überraschenderweise wurde gefunden, dass wässrige Lösungen von Sorbaten, insbesondere von Kaliumsorbat, eine einfache und schnelle Beseitigung nicht nur von reinen Algenbelägen, sondern auch von älteren, auf Algen basierenden und zusätzlichen Schmutz und Ablagerungen enthaltenden Belägen erlauben. An dieser Wirkung ist besonders überraschend, dass keine weiteren Mittel erforderlich sind und nach kurzem Einwirken eine einfache mechanische Beseitigung der Beläge möglich ist, ohne dass dabei Kräfte oder Bedingungen anzuwenden sind, die glatte oder empfindliche Oberflächen beschädigen würden.

Die vorliegende Erfindung umfasst somit einmal die Verwendung von Sorbinsäure oder deren Salze, insbesondere die Verwendung von Alkali - oder Erdalkalisalzen der Sorbinsäure, zur Beseitigung und/oder Verhinderung der genannten Ablagerungen.

Weiterhin umfasst die Erfindung Mittel, bevorzugt wässrige Mittel, die die genannten Salze enthalten und dem vorgenannten Zweck dienen, sowie ein Verfahren zur Beseitigung und/oder Verhinderung der beschriebenen Ablagerungen unter Einsatz dieser Mittel.

Bevorzugt sind die gut wasserlöslichen Salze der Sorbinsäure, d. h. die Alkalisalze, und von diesen wiederum das Na- oder K-Salz, insbesondere das Kaliumsalz (Kaliumsorbat).

Die erfindungsgemäßen Mittel können neben Wasser und einem Salz der Sorbinsäure oder verschiedenen Salzen der Sorbinsäure auch weitere Hilfs- und /oder Wirkstoffe enthalten. Hierbei handelt es sich bevorzugt um solche Substanzen, die in im Handel erhältlichen Algiziden verwendet werden, und schließen biozide Wirkstoffe und übliche organische Lösungsmittel mit ein. Beispiele für solche zusätzlichen Substanzen finden sich z. B. in Römpp Chemie-Lexikon, 10. Auflage, S. 103, Thieme Verlag Stuttgart, unter dem Stichwort Algizide. Solche zusätzlichen Bestandteile sind nicht zwingend und können sogar, wie zuvor beschrieben, die erfindungsgemäßen Vorteile minimieren oder ganz aufheben.

Die beschriebene Wirkung ist deshalb besonders überraschend, weil Sorbinsäure und ihre Salze seit langer Zeit als Konservierungsstoffe für Lebensmittel und auch für technische Zwecke eingesetzt werden und ihre Wirkung gegen Hefen, Schimmelpilze und auch Bakterien umfangreich untersucht und dokumentiert ist. Im Gegensatz dazu finden sich bisher praktisch keine Angaben zu einer Wirkung gegen Algen oder Flechten und keine Hinweise auf die erfindungsgemäßen Verwendungen.

In der umfangreichen Monografie zu Eigenschaften und Anwendungen der Sorbinsäure von Lück wird nur ganz kurz angemerkt, dass zu diesem Gebiet keine umfassenden Untersuchungen vorliegen. Es wird lediglich über eine wachstumshemmende Wirkung gegen die Alge Chlorella vulgaris sowie über eine Wirkung bei pH 4,4, nicht aber bei pH 6,5 berichtet wird (E. Lück, Sorbinsäure, Band II, Seite 56, Behr's Verlag, Hamburg, 1972).

In einer weiteren Arbeit wurde zwar über eine begrenzte Wirkung gegen die Alge Chlorella pyrenoidosa berichtet, die auch bei pH 6,7 eintrat, die aber weitaus schwächer als diejenige einiger anderer untersuchter Substanzen war, (J. Am. Chem. Oil Chem. Soc. 61, No. 12, 1984, Seiten 1877 bis 1880).

In Lebensmitteln und technischen Produkten werden Sorbinsäure bzw. ihre Salze meistens in Konzentrationen von 0,2 bis max. 0,5 Gew.-% verwendet. Über die Anwendung höherer Konzentrationen liegen offensichtlich bisher insbesondere bei Algen und Flechten keinerlei Untersuchungen vor.

Es ist allgemein bekannt (E. Lück, Sorbinsäure, Bd. II, Seiten 88 bis 90, Behr's Verlag, Hamburg, 1972), dass Sorbinsäure in sauren Medien weitaus besser als in neutralen wirkt und dass bei Verwendung von Kaliumsorbat die in sauren Medien daraus freigesetzte Sorbinsäure das eigentlich konservierende Agens ist. Kaliumsorbat reagiert leicht alkalisch und ist selbst weitaus weniger wirksam gegen Mikroorganismen als Sorbinsäure. Um so überraschender ist es, dass im vorliegenden Fall die alkalisch reagierende Lösung von Kaliumsorbat gut und schnell wirkt, obwohl ihr pH-Wert üblicherweise um oder sogar etwas über acht liegt, und dass sie darüber hinaus nicht nur die Algen abzutöten scheint, sondern auch die mechanische Beseitigung von Algen und deren Folgebelägen stark erleichtert.

Es ist weiterhin überraschend, dass das eigentlich gut wasserlösliche Kaliumsorbat bei leicht porösen Steinen in diese eindringt und offensichtlich durch Regen oder Spritzwasser nicht umgehend wieder ausgewaschen wird, so dass eine gewisse Depotwirkung eintritt und für eine gewisse Zeit eine Schutzwirkung vor neuen Belägen bestehen bleibt.

Damit ist die Anwendung wässriger Lösungen von Sorbinsäuresalzen, insbesondere von Kaliumsorbat, ein wesentlicher Fortschritt in der Beseitigung unerwünschter Beläge, insbesondere auf mineralischen Oberflächen wie Steinen, und deren Schutz vor der Neubildung solcher Beläge.

Für die Reinigung von Oberflächen lassen sich bevorzugt wässrige Kaliumsorbat-Lösungen im Bereich von 5 bis 40 Gew.-%, vorzugsweise von 10 bis 20 Gew.-%, einsetzen (jeweils bezogen auf die fertige Zubereitung). Diese Lösungen können aus festem Kaliumsorbat, das sich sehr schnell und leicht in Wasser löst, nach Bedarf hergestellt werden. Sie lassen sich aber auch auf Vorrat herstellen und lagern, wenn die dafür verwendeten Gebinde Schutz vor Lichteinwirkung geben. Evtl. zusätzlich vorhandene Substanzen werden in der Regel durch intensives Rühren in diese Lösungen/Zubereitungen eingearbeitet.

Kaliumsorbat ist als Festsubstanz wie auch in wässriger Lösung problemlos zu handhaben. Es wirkt bereits als feste Substanz kaum hautreizend und reizt die Haut in wässriger Lösung im genannten Konzentrationsbereich bei allenfalls anzunehmenden kurzfristigen Einwirkungen nicht. Es kann also problemlos auch von Nichtfachleuten angewandt werden. Sofern Menschen, auch Kleinkinder, oder Tiere in Kontakt mit evtl. verbleibenden Rückständen kommen, ist das aus gesundheitlicher Sicht unbedenklich. Darüber hinaus ist Kaliumsorbat auch unter der Berücksichtigung des Umweltschutzes problemlos einsetzbar. Wenn es in geringer Konzentration unterhalb der Hemmschwelle vorliegt, wird es von vielen lebenden Organismen wie Fettsäuren verstoffwechselt, also zu Wasser und Kohlendioxid abgebaut. Es ist davon auszugehen, dass bereits die bei einmaligem Spülen nach der Reinigung eintretende Verdünnung direkt zu Konzentrationen führt, die biologisch sowohl in der unmittelbaren Umgebung wie auch in Kläranlagen problemlos abgebaut werden können.

Aufgrund seiner guten Wirkung gegen Hefen und Schimmelpilze und seiner besonders günstigen physiologischen Eigenschaften ist Kaliumsorbat wie die darin enthaltene Wirksubstanz Sorbinsäure zur Konservierung von Lebensmitteln weltweit und in breitem Umfang zugelassen. Es darf damit in erheblichem Umfang auch oral aufgenommen werden.

Für die erfindungsgemäße Verwendung kommen bevorzugt wässrige Lösungen von Sorbaten, insbesondere von Kaliumsorbat, im Bereich von 5 bis 40 Gew.-%, vorzugsweise aber im Bereich von 10 bis 20 Gew.-%, in Frage. Diese Lösungen werden auf die zu behandelnden Flächen in geeigneter Art, beispielsweise durch Aufsprühen, Aufgießen oder Aufstreichen, bis zur guten und gleichmäßigen Durchfeuchtung des Belags aufgebracht und dieser nach einer der Dicke des Belages angepassten Einwirkzeit mechanisch entfernt. Bei dünnen Belägen auf glatten Flächen können dafür bereits zehn Minuten ausreichen. Bei dicken Belägen auf rauen Flächen kann die Einwirkzeit problemlos bis auf eine Stunde und mehr ausgedehnt werden. Bei glatten Flächen ist es nicht selten ausreichend, die aufgetragene Lösung mit einem scharfen Wasserstrahl abzuspritzen und dabei die Beläge zu beseitigen. Bei rauen Oberflächen ist dafür zusätzlich eine mechanische Bearbeitung erforderlich, beispielsweise mit Hilfe einer Bürste oder mit Hilfe geeigneter mechanischer Reinigungsgeräte.

Die obigen Angaben bzgl. Verwendung und Zusammensetzung der Kaliumsorbat haltigen Mittel gelten sinngemäß und bevorzugt auch für die anderen, erfindungsgemäß zu verwendenden Salze der Sorbinsäure.

Allgemein lassen sich die erforderlichen Konzentrationen, Einsatzmengen und Einwirkzeiten der erfindungsgemäßen Mittel insbesondere in Abhängigkeit von der Art des Belages und der Oberflächenbeschaffenheit durch einfache Orientierungsversuche schnell und sicher ermitteln.

Die Erfindung wird durch die folgenden Beispiele näher erläutert:

### Beispiel 1

Beseitigung eines Algenfilms auf einer glatten Marmorfläche mit Hilfe einer Kaliumsorbatlösung

Eine von einem grünen, dünnen Algenbelag überzogene glatte Marmoroberfläche wird gleichmäßig mit einer wässrigen Lösung von 10 Gew.-% Kaliumsorbat besprüht, bis sie gut und gleichmäßig benässt ist. Nach zehnminütigem Einwirken wird die Oberfläche mit einem scharfen Wasserstrahl abgespritzt. Der Algenfilm lässt sich durch den Wasserstrahl entfernen.

### Beispiel 2

Beseitigung eines Algenfilms auf einer glatten Marmorfläche mit Hilfe eines scharfen Wasserstrahls ohne Kaliumsorbat

Eine von einem grünen, dünnen Algenbelag überzogene glatte Marmoroberfläche wird gleichmäßig mit Wasser besprüht, bis sie gut und gleichmäßig benässt ist. Nach zehnminütigem Einwirken wird sie mit einem scharfen Wasserstrahl abgespritzt. Der Algenfilm bleibt bis auf kleine Abtragungen auf der Fläche haften.

### Beispiel 3

Beseitigung eines grünen Algenbelags auf einer rauen Kunststeinfläche mit Hilfe einer Kaliumsorbatlösung

Auf einen rauen Kunststein, der mit einem grünen Algenbelag überzogen ist, wird eine wässrige Lösung von 10 Gew.-% Kaliumsorbat gleichmäßig aufgebracht. Nach Einwirken für 30 Minuten wird der Stein gut und gleichmäßig mit einer Bürste bearbeitet.

Danach wird mit Wasser nachgespült. Der Belag wird beim Abbürsten und nachfolgenden Spülen abgetragen.

### Beispiel 4

Beseitigung eines grünen Algenbelags auf einer rauen Kunststeinfläche ohne Kaliumsorbat

Ein rauer Kunststein, der mit einem grünen Algenbelag überzogen und dadurch unansehnlich geworden ist, wird gleichmäßig benässt. Anschließend wird der Stein gut und gleichmäßig mit einer Bürste bearbeitet. Danach wird mit Wasser nachgespült. Der Belag wird beim Abbürsten und nachfolgenden Spülen nur teilweise abgetragen. Der Stein bleibt grünlich verfärbt.

### Beispiel 5

Beseitigung eines schwarzen, Algen enthaltenden Films auf einer rauen Kunststeinfläche mit Hilfe einer Kaliumsorbatlösung

Auf einen rauen Kunststein, der mit einem grauschwarzen Belag überzogen und dadurch unansehnlich geworden ist, wird eine wässrige Lösung von 20 Gew.-% Kaliumsorbat gleichmäßig aufgebracht. Nach Einwirken für 30 Minuten wird der Stein gut und gleichmäßig mit einer Bürste bearbeitet. Danach wird mit Wasser nachgespült. Der Belag wird beim Abbürsten und nachfolgenden Spülen abgetragen. Der Stein erhält wieder die ursprüngliche hellgraue Farbe.

### Beispiel 6

Beseitigung eines schwarzen, Algen enthaltenden Films auf einer rauen Kunststeinfläche durch mechanische Bearbeitung ohne Kaliumsorbat.

Ein rauer Kunststein, der mit einem grauschwarzen Belag überzogen und dadurch unansehnlich geworden ist, wird mit Wasser gleichmäßig benässt. Nach Einwirken für 30 Minuten wird der Stein gut und gleichmäßig mit einer Bürste bearbeitet. Danach wird mit Wasser nachgespült. Der Belag wird beim Abbürsten und nachfolgendem Spülen nur teilweise abgetragen. Der Stein behält die grauschwarze Farbe.

## Patentansprüche

1. Verwendung von Sorbinsäure und/oder deren Salzen zur Beseitigung oder Verhinderung von Ablagerungen auf Oberflächen.

2. Verwendung nach Anspruch 1, **dadurch gekennzeichnet, dass** als Salze die gut wasserlöslichen Alkali- oder Erdalkalisalze der Sorbinsäure, insbesondere die Alkalisalze, verwendet werden.

3. Verwendung nach Anspruch 1 oder 2, **dadurch gekennzeichnet, dass** als Salz Kaliumsorbat verwendet wird.

4. Verwendung nach einem oder mehreren der Ansprüche 1 bis 3, **dadurch gekennzeichnet, dass** es sich bei den Oberflächen um mineralische Oberflächen, insbesondere um Stein-, Keramik-, Beton- oder Mörteloberflächen, handelt.

5. Verwendung nach einem oder mehreren der Ansprüche 1 bis 4, **dadurch gekennzeichnet, dass** es sich bei den Ablagerungen um solche handelt, die durch oder nach dem Befall oder Auftreten von blütenlosen Pflanzen, insbesondere von Algen, auf diesen Oberflächen entstehen.

6. Mittel zur Beseitigung oder Verhinderung von Ablagerungen auf Oberflächen enthaltend Wasser und Sorbinsäure und/oder deren Salze.

7. Mittel nach Anspruch 6, **dadurch gekennzeichnet, dass** es ein gut wasserlösliches Alkali- oder Erdalkalisalz der Sorbinsäure, insbesondere ein Alkalisalz der Sorbinsäure, enthält.

8. Mittel nach Anspruch 6 oder 7, **dadurch gekennzeichnet, dass** es Kaliumsorbat enthält.

9. Mittel nach einem oder mehreren der Ansprüche 6 bis 8, **dadurch gekennzeichnet, dass** es ein oder mehrere Salze der Sorbinsäure zu insgesamt 5 bis 40, bevorzugt zu insgesamt 10 bis 20 Gew.-%, bezogen auf die fertige Zubereitung, enthält.

10. Mittel nach einem oder mehreren der Ansprüche 6 bis 9, **dadurch gekennzeichnet, dass** es zusätzliche Hilfs- und/oder Wirkstoffe enthält.

11. Verfahren zur Beseitigung oder Verhinderung von Ablagerungen auf Oberflächen, **dadurch gekennzeichnet, dass** ein Mittel nach einem oder mehreren der Ansprüche 6 bis 10 verwendet wird.

12. Verfahren nach Anspruch 11, **dadurch gekennzeichnet, dass** es sich bei den Oberflächen um mineralische Oberflächen, insbesondere um Stein-, Keramik-, Beton- oder Mörteloberflächen, handelt.

13. Verfahren nach Anspruch 11 oder 12, **dadurch gekennzeichnet, dass** es sich bei den Ablagerungen um solche handelt, die durch oder nach dem Befall oder Auftreten von blütenlosen Pflanzen, insbesondere von Algen, auf diesen Oberflächen entstehen.
